# EUROPÄISCHE PATENTSCHRIFT

(11) **EP 4 202 373 B1**
(45) Veröffentlichungstag und Bekanntmachung des Hinweises auf die Patenterteilung: **20.12.2023**
(21) Anmeldenummer: 21217478.3
(22) Anmeldetag: 23.12.2021
(51) Int. Cl.: G01D 5/14, B65C 9/40, G01D 5/25, G01D 18/00, B65C 1/02

(54) **VERFAHREN ZUR EINRICHTUNG EINES POSITIONSMESSSYSTEMS FÜR EINEN ETIKETTIERER EINES PREISAUSZEICHNUNGSSYSTEMS**
METHOD FOR ESTABLISHING A POSITION MEASURING SYSTEM FOR A LABELER OF A PRICE MARKING SYSTEM
PROCÉDÉ DE MISE EN PLACE D'UN SYSTÈME DE MESURE DE LA POSITION POUR UN ÉTIQUETEUR D'UN SYSTÈME DE MARQUAGE DES PRIX

(43) Veröffentlichungstag der Anmeldung: 28.06.2023
(73) Patentinhaber: Bizerba SE & Co. KG, 72336 Balingen (DE)
(72) Erfinder: TAIGEL, Florian, 72131 Ofterdingen (DE); FICHTER, René, 72351 Geislingen (DE)
(74) Vertreter: Manitz Finsterwald Patent- und Rechtsanwaltspartnerschaft mbB

(56) Entgegenhaltungen:
- DE-A1-102004 035 284
- DE-A1-102013 014 282
- DE-A1-102013 203 456
- DE-C1- 3 443 176

## Beschreibung

Die Erfindung betrifft ein Verfahren zur Einrichtung eines Positionsmesssystems, das bei der Einstellung der Position eines Etikettierers eines Preisauszeichnungssystems verwendet wird.

Preisauszeichnungssysteme können in der Lebensmittelindustrie in Produktionslinien integriert werden, um zuvor von einem Wägeband gewogene Packungen, d.h. verpackte Ware, automatisch zu etikettieren. Hierbei laufen die Packungen auf einem Förderband an dem Etikettierer vorbei und werden dabei mit einem Etikett versehen. Über die Position des Etikettierers kann die Etikettenposition an den zu etikettierenden Packungen eingestellt werden. Bei bekannten Preisauszeichnungssystemen wird die Position des Etikettierers in Höhen- und/oder Horizontalrichtung über mechanische Schleifpotentiometer ermittelt. Diese können jedoch einem Verschleiß unterliegen, so dass deren Lebensdauer begrenzt ist.

Grundsätzlich ist es auch denkbar, die Position des Etikettierers mittels einer Sensorleiste mit mehreren in einer Reihe angeordneten magnetfeldsensitiven Sensoren und aufgrund der Position eines entlang der Sensorleiste verstellbaren Magneten relativ zu der Sensorleiste zu bestimmen. Hierbei geben die Sensoren ein Sensorsignal zusammen mit ihrer jeweiligen Adresse an eine Steuer- und Auswerteeinheit ab, wenn sich der Magnet in der Nähe des jeweiligen Sensors befindet. Dabei muss die Lage jedes Sensors auf der Sensorleiste bekannt sein, d.h. es muss bekannt sein, in welcher Reihenfolge die Sensoren auf der Sensorleiste angeordnet sind. Diese Reihenfolge kann bei der Produktion der Sensorleiste durch den Sensorleistenhersteller in der Elektronik der Sensorleiste hinterlegt werden.

Ein derartiges magnetisches Positionsmesssystems besitzt eine hohe Lebensdauer.

Allerdings muss, wenn die Sensorleiste aus mehreren Sensorleistenkomponenten mit jeweils mehreren magnetfeldsensitiven Sensoren zusammengesetzt ist, um eine für die jeweilige Anwendung geeignete Sensorleistenlänge zu erhalten, auch die Reihenfolge der Anordnung der Sensorleistenkomponenten in der Elektronik hinterlegt werden. Dies ist jedoch nicht mehr möglich, wenn die Sensorleistenkomponenten erst beim Hersteller des Preisauszeichnungssystems zufällig aus einem Vorrat von Sensorleistenkomponenten entnommen und zu der Sensorleiste zusammengesetzt werden.

Das Dokument DE 10 2013 203 456 A1 offenbart einen Etikettierer eines Preisauszeichnungssystems. Die Dokumente DE 10 2004 035 284 A1 und DE 10 2013 014 282 A1 offenbaren jeweils ein magnetisches Positionsmesssystem mit einer Sensorleiste mit mehreren in einer Reihe angeordneten magnetfeldsensitiven Sensoren, einem entlang der Sensorleiste verstellbaren Magneten und einer mit den magnetfeldsensitiven Sensoren verbundenen Steuer- und Auswerteeinheit. Das Dokument DE 34 43 176 C1 offenbart ein Verfahren zur Kalibrierung eines magnetischen Positionsmesssystems.

Der Erfindung liegt die Aufgabe zugrunde, die Voraussetzungen dafür zu schaffen, dass die Position eines Etikettierers eines Preisauszeichnungssystems mit einem langlebigen und von dem Hersteller des Preisauszeichnungssystems einfach einzurichtenden Positionsmesssystem eingestellt werden kann.

Diese Aufgabe wird durch ein Verfahren mit den Merkmalen des Anspruchs 1 gelöst, und insbesondere durch ein Verfahren zur automatischen Einrichtung eines magnetischen Positionsmesssystems, das bei der Einstellung der Position eines Etikettierers eines Preisauszeichnungssystems verwendet wird und eine Sensorleiste mit mehreren in einer Reihe angeordneten magnetfeldsensitiven, jeweils eine eineindeutige Kennung aufweisenden Sensoren, insbesondere Hall-Sensoren, einen entlang der Sensorleiste verstellbaren Magneten und eine mit den Sensoren verbundene Steuer- und Auswerteeinheit aufweist, wobei bei dem Verfahren aus Sicht der Sensorleiste der Magnet an den Sensoren der Sensorleiste entsprechend der Reihenfolge ihrer Anordnung vorbeigeführt wird, beim Vorbeiführen an dem jeweiligen Sensor dessen jeweilige eineindeutige Kennung an die Steuer- und Auswerteeinheit übermittelt wird, anhand der Reihenfolge des Eingangs der eineindeutigen Kennungen die Reihenfolge der Anordnung der Sensoren auf der Sensorleiste erkannt wird, und aus dem bekannten gegenseitigen Abstand der Sensoren zueinander und der erkannten Reihenfolge der Anordnung der Sensoren auf der Sensorleiste die Position des jeweiligen Sensors auf der Sensorleiste berechnet und für einen Normalbetrieb des magnetischen Positionsmesssystems gespeichert wird.

Die Erfindung ermöglicht, dass ein magnetisches Positionsmesssystem mit mehreren in einer Reihe angeordneten magnetfeldsensitiven Sensoren verwendet werden kann. Die Reihenfolge der Anordnung der Sensoren auf der Sensorleiste muss nicht bereits bei der Produktion der Sensorleiste programmiert werden, sondern die Bestimmung dieser Reihenfolge kann erst durch den Hersteller des Preisauszeichnungssystems erfolgen. Hierzu wird der Magnet an der Sensorleiste oder umgekehrt die Sensorleiste an dem Magneten vorbeigeführt, wobei beim Vorbeiführen nacheinander alle Sensoren das Magnetfeld des Magneten erfassen und in Reaktion hierauf ihre jeweilige Kennung an eine Steuer- und Auswerteeinheit übermitteln. Aus der Reihenfolge des Eingangs der Kennungen kann dann auf die Reihenfolge der Anordnung der Sensoren auf der Sensorleiste geschlossen werden. Daraus können zusammen mit dem bekannten gegenseitigen Abstand der Sensoren zueinander die Positionen der Sensoren auf der Sensorleiste ermittelt werden. Die Positionen der Sensoren auf der Sensorleiste können also bei einer Lernfahrt ermittelt und für einen Normalbetrieb des Positionsmesssystems abgespeichert werden. Insbesondere wird das Verfahren durch die Steuer- und Auswerteeinheit durchgeführt und/oder gesteuert. Unter dem Merkmal eines entlang der Sensorleiste verstellbaren Magneten ist - wie vorstehend bereits erläutert - zu verstehen, dass der Magnet an der Sensorleiste oder umgekehrt die Sensorleiste an dem Magneten vorbeigeführt werden kann.

Vorteilhafte Ausgestaltungen der Erfindung sind in den Unteransprüchen, der Beschreibung und der Zeichnung beschrieben.

insbesondere kann vorgesehen sein, dass die Sensorleiste mehrere Sensorleistenkomponenten mit jeweils mehreren der Sensoren umfasst, wobei vor dem Vorbeiführen des Magneten an den Sensoren der Sensorleiste die Sensorleistenkomponenten zu der Sensorleiste zusammengesetzt, insbesondere zusammengesteckt, werden. Es können also mehrere Sensorleistenkomponenten zusammengesetzt werden, um eine Sensorleiste mit der gewünschten Länge zu erhalten. Sensorleisten können mit dem erfindungsgemäßen Verfahren willkürlich durch den Hersteller des Preisauszeichnungssystems zusammengesetzt werden.

Grundsätzlich könnte das Verfahren auch bei der Produktion der Sensorleiste durchgeführt werden. Bei einer Sensorleiste, die nur eine Sensorleistenkomponente umfasst, wäre dies möglich, bei einer Sensorleiste, die mehrere Sensorleistenkomponenten umfasst, die unabgestimmt und zufällig zusammengesetzt werden, hingegen nicht. Bevorzugt wird das Verfahren daher bei der Produktion und/oder bei der Inbetriebnahme und/oder bei jedem Start des magnetischen Positionsmesssystems und/oder des Preisauszeichnungssystems durchgeführt.

Insbesondere ist die Steuer- und Auswerteeinheit dazu eingerichtet, in einem Normalbetrieb des magnetischen Positionsmesssystems die Position des Magneten relativ zu der Sensorleiste anhand von Sensorsignalen, die von den Sensoren übermittelt werden, wenn sich der Magnet in ihrer Nähe befindet, zu bestimmen.

Dabei kann vorgesehen sein, dass die Steuer- und Auswerteeinheit dazu eingerichtet ist, die Position des Magneten basierend auf mehreren Sensorsignalen bestimmt wird und/oder dass die Sensorsignale anzeigen, wie weit sich der Magnet von dem jeweiligen Sensor entfernt befindet. Hierdurch kann die Genauigkeit der Bestimmung der Position des Magneten erhöht werden.

Die Erfindung betrifft ferner ein Preisauszeichnungssystem mit wenigstens einem Etikettierer, insbesondere einem Oberbahn-Etikettierer für die Packungsoberseite und/oder einem Unterbahn-Etikettierer für die Packungsunterseite, der über ein Verstellsystem horizontal und/oder vertikal verstellbar ist, um die Position des Etikettierers, insbesondere einer Schublade eines Unterbahn-Etikettierers für die Packungsunterseite, einzustellen, und wenigstens einem magnetischen Positionsmesssystem, das bei der Einstellung der Position eines Etikettierers eines Preisauszeichnungssystems verwendbar ist und eine Sensorleiste mit mehreren in einer Reihe angeordneten magnetfeldsensitiven, jeweils eine eineindeutige Kennung aufweisenden Sensoren, insbesondere Hall-Sensoren, einen entlang der Sensorleiste verstellbaren Magneten und eine mit den magnetfeldsensitiven Sensoren verbundene Steuer- und Auswerteeinheit aufweist, die dazu eingerichtet ist, ein Verfahren zur automatischen Einrichtung des magnetischen Positionsmesssystems durchzuführen, bei dem aus Sicht der Sensorleiste der Magnet an den Sensoren der Sensorleiste entsprechend der Reihenfolge ihrer Anordnung vorbeigeführt wird, beim Vorbeiführen an dem jeweiligen Sensor dessen jeweilige eineindeutige Kennung an die Steuer- und Auswerteeinheit übermittelt wird, anhand der Reihenfolge des Eingangs der eineindeutigen Kennungen die Reihenfolge der Anordnung der Sensoren auf der Sensorleiste erkannt wird, und aus dem bekannten gegenseitigen Abstand der Sensoren zueinander und der erkannten Reihenfolge der Anordnung der Sensoren auf der Sensorleiste die Position des jeweiligen Sensors auf der Sensorleiste berechnet und für einen Normalbetrieb des Positionsmesssystems gespeichert wird.

Dabei kann bei dem vorgenannten Preisauszeichnungssystem vorgesehen sein, dass die Sensorleiste mehrere Sensorleistenkomponenten mit jeweils mehreren der Sensoren umfasst, die zu der Sensorleiste zusammengesetzt, insbesondere zusammengesteckt, sind. Unabhängig hiervon gelten auch die nachfolgenden Ausgestaltungen der Erfindung für das vorgenannte Preisauszeichnungssystem.

Bevorzugt weist das Verstellsystem einen Spindelmotor, eine von dem Spindelmotor antreibbare Gewindespindel und eine auf die Gewindespindel aufgesetzte Spindelmutter auf, wobei der Magnet an der Spindelmutter befestigt ist, um entlang der Sensorleiste verstellbar zu sein, und wobei der Etikettierer bei angetriebenem Spindelmotor horizontal und/oder vertikal verstellbar ist. Über einen Spindelantrieb kann die Position des Magneten und damit die Position des Etikettierers des Preisauszeichnungssystems einfach, zuverlässig und mit hoher Genauigkeit bestimmt bzw. eingestellt werden.

Nach einer bevorzugten Ausgestaltung der Erfindung ist die Spindelmutter, insbesondere zwischen den beiden Schenkeln eines ortsfest fixierten U-förmigen Halters, ortsfest gehalten und/oder ist die Sensorleiste mit der Gewindespindel verfahrbar. Da die Spindelmutter ortsfest gehalten ist, wird bei dem erfindungsgemäßen Verfahren und bei dem Normalbetrieb des Positionsmesssystems die Sensorleiste an dem Magneten, und nicht umgekehrt, vorbeigeführt. Um den Etikettierer zu verstellen, bewegt sich die Gewindespindel entlang ihrer Längsrichtung. Üblicherweise wird bei einem Spindelgetriebe die Gewindespindel ortsfest gehalten. Dreht sich die Gewindespindel, verfährt die Spindelmutter entlang der Gewindespindel. Wird hingegen die Spindelmutter ortsfest gehalten, insbesondere an einer Trageinrichtung und über die Trageinrichtung an einem Gestell des Preisauszeichnungssystems, unterliegt die Gewindespindel selbst einer Verfahrbewegung.

Vorzugsweise ist vorgesehen, dass die Spindelmutter in einem Kunststoff-Spritzgussverfahren hergestellt ist, wobei bevorzugt ein metallisches Innengewinde, insbesondere eine Innengewindehülse, der Spindelmutter und/oder der Magnet in den Spritzguss der Spindelmutter eingegossen ist. Hierdurch kann die Spindelmutter kostengünstig hergestellt und eine einfache Befestigung des Magneten an der Spindelmutter erreicht werden.

Nach einer weiteren bevorzugten Ausgestaltung der Erfindung umfasst das Preisauszeichnungssystem ein sich parallel zu der Gewindespindel erstreckendes Halteprofil, das eine Profilwand mit einer der Gewindespindel zugewandten ersten Seite und einer von der Gewindespindel abgewandten zweiten Seite aufweist, wobei die erste Seite gegenförmig zu der Spindelmutter ausgebildet ist, um bei angetriebenem Spindelmotor ein Drehen der Spindelmutter um ihre Achse zu unterbinden, und wobei an der zweiten Seite eine, insbesondere C-förmige, Schiene ausgebildet ist, in die die Sensorleiste eingesetzt, insbesondere eingeschoben ist. Das Halteprofil kann dadurch mehrere Funktionen gleichzeitig erfüllen, da es einerseits die Sensorleiste halten und andererseits gleichzeitig als Verdrehsicherung für die Gewindespindel dienen und die Gewindespindel, insbesondere aus Sicht des Halteprofils, führen kann.

Dabei ist es bevorzugt, wenn das Halteprofil aus einem Kunststoff oder einem nicht magnetisierbaren Material, z.B. Aluminium, gebildet ist, damit die zwischen dem Magnet und den Sensoren liegende Profilwand das Magnetfeld des Magneten möglichst wenig stört und somit die Position des Magneten besonders genau bestimmt werden kann.

Die Erfindung wird im Folgenden beispielhaft unter Bezugnahme auf die Zeichnung beschrieben. Es zeigen:
- Fig. 1: ein erfindungsgemäßes Preisauszeichnungssystem in einer Seitenansicht mit einem Etikettierer und einem Verstellsystem zur horizontalen Verstellung der Position des Etikettierers,
- Fig. 2a: das Verstellsystem in Einzelansicht,
- Fig. 2b: das Verstellsystem gemäß Fig. 2a ohne Gehäuse,
- Fig. 2c: das Verstellsystem mit einem magnetischen Positionsmesssystem,
- Fig. 2d: eine vergrößerte Darstellung des magnetischen Positionsmesssystems gemäß Fig. 2c,
- Fig. 3: ein Halteprofil für das magnetische Positionsmesssystem, und
- Fig. 4: einen Querschnitt durch das Verstellsystem mit dem mit dem magnetischen Positionsmesssystem.

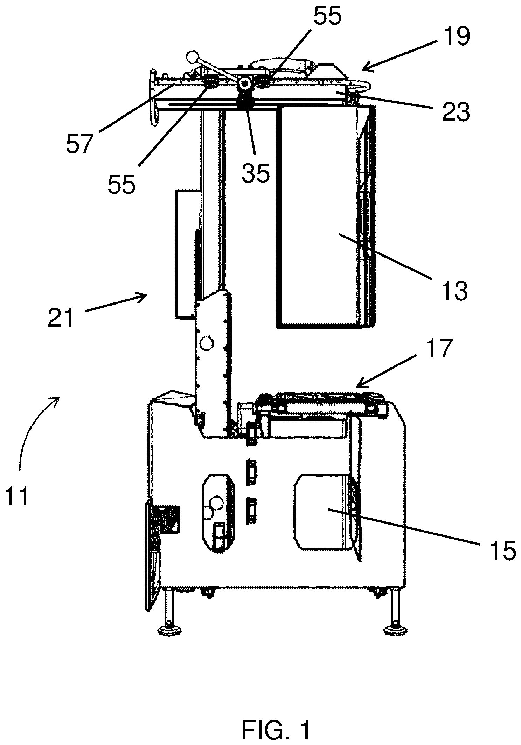

In der Lebensmittelindustrie werden Packungen über Förderbänder transportiert und dabei automatisch gewogen und etikettiert. Die Fig. 1 zeigt ein Preisauszeichnungssystem 11, dem ein nicht dargestelltes Wägeband vorgeschaltet ist, auf dem die Packungen gewogen und anschließend dem Preisauszeichnungssystem 11 zugeführt werden, um auf die Packungen Etiketten zu applizieren. Das in Fig. 1 gezeigte Preisauszeichnungssystem umfasst hierzu zwei Etikettierer 13, 15, nämlich einen Oberbahn-Etikettierer 13 und einen Unterbahn-Etikettierer 15. Der Oberbahn-Etikettierer 13 befindet sich oberhalb eines aus zwei unmittelbar aufeinander folgenden Teilförderbändern gebildeten Förderbands 17, auf dem die Packungen einlaufen, und appliziert Etiketten von oben auf die Oberseite der Packungen. Der Unterbahn-Etikettierer 15 befindet sich unterhalb des Förderbands 17 und spendet Etiketten von unten durch einen zwischen den beiden Teilförderbändern ausgebildeten Spalt hindurch auf die Unterseite der verpackten Waren. Die beiden Etikettierer 13, 15 können wahlweise, insbesondere abhängig von der verpackten Ware, oder gleichzeitig, wobei eines der beiden Etiketten dann ein Schmucketikett sein kann, betrieben werden. Die Teilung des Förderbands 17 in die beiden unmittelbar aufeinander folgenden Teilförderbänder ist aus Fig. 1 nicht erkennbar.

Der Oberbahn-Etikettierer 13 ist über ein Verstellsystem 19 horizontal und über ein weiteres Verstellsystem 21 vertikal verstellbar. Über das Verstellsystem 19 kann die Position des Oberbahn-Etikettierers 13 relativ zu den Packungen und damit die Etikettenposition an den zu etikettierenden Packungen eingestellt werden. Der Unterbahn-Etikettierer 15 ist auf einem nicht erkennbaren Auszug angeordnet und in der Fig. 1 nach rechts aus dem Preisauszeichnungssystem 11 herausziehbar, um die Zugänglichkeit zu dem Unterbahn-Etikettierer 15 zu verbessern. Der Unterbahn-Etikettierer 15 kann ebenfalls über wenigstens ein Verstellsystem in seiner Position verstellbar sein. Nachfolgend wird das Verstellsystem 19 beschrieben. Das weitere Verstellsystem 21 ist analog aufgebaut und wird daher nicht separat erläutert.

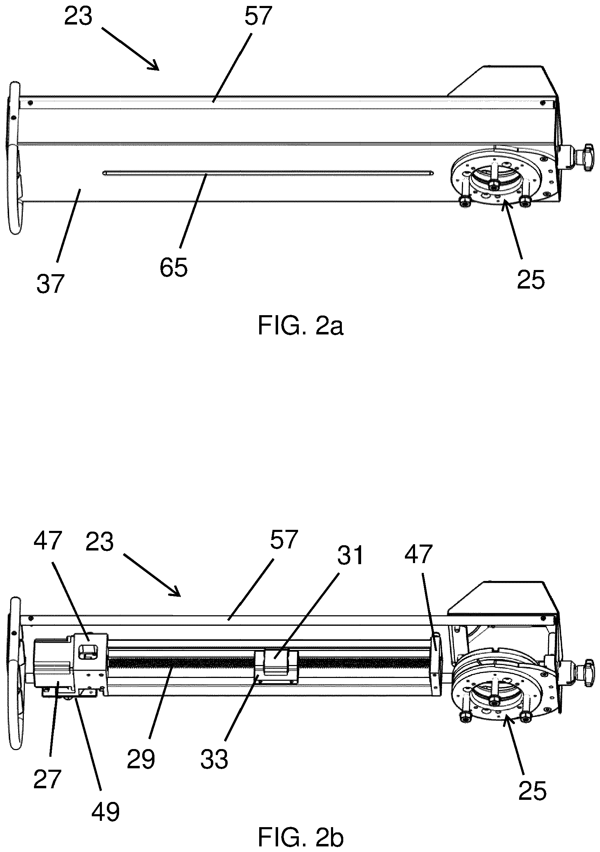

Das Verstellsystem 19 ist in einem langgestreckten Schlitten 23 untergebracht, der über zwei Laufschienen 57, von denen nur eine sichtbar ist, in Abstützrollen 55 verfahrbar gelagert ist und an dessen einem Ende an einer Befestigungsstelle 25 der Etikettierer 13 angebracht ist, wie aus der perspektivischen Ansicht schräg von unten gemäß Fig. 2a ersichtlich ist. In Fig. 2b ist ein Gehäuse 37 des Schlittens 23 weggelassen, so dass ein Spindelmotor 27, eine von dem Spindelmotor 27 antreibbare Gewindespindel 29 und eine auf die Gewindespindel 29 aufgesetzte, als Kunststoffspritzteil ausgebildete Spindelmutter 31 erkennbar sind. Die Spindelmutter 31 ist dabei ortsfest gehalten, und zwar zwischen den beiden Schenkeln eines U-förmigen Halters 33, der an einer Trageinrichtung 35 des Preisauszeichnungssystems 11 fixiert ist. Hierzu durchgreift die Trageinrichtung 35 einen in dem Gehäuse 37 ausgebildeten Schlitz 65. Da die Spindelmutter 31 ortsfest gehalten ist, wird bei angetriebenem Spindelmotor 27 die Gewindespindel 29 und mit ihr der Schlitten 23 verfahren und damit der Etikettierer 13 horizontal verstellt.

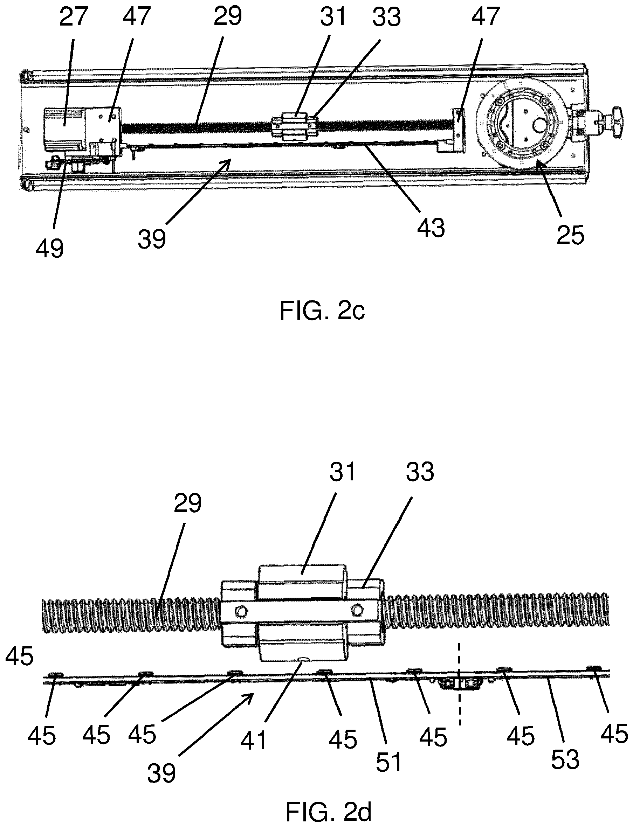

In das Verstellsystem 19 ist ein magnetisches Positionsmesssystem 39 integriert, das zur Einstellung der Position des Etikettierers 13 verwendet wird und das in einer Ansicht von unten gemäß den Fig. 2c und 2d dargestellt ist. Das Positionsmesssystem 39 umfasst einen Magneten 41, der an der Spindelmutter 31 befestigt, insbesondere in die Spindelmutter 31 eingegossen ist, und eine Sensorleiste 43 mit mehreren in einer Reihe angeordneten magnetfeldsensitiven Sensoren 45, insbesondere Hall-Sensoren. In dem vorliegenden Ausführungsbeispiel sind 12 Sensoren 45 vorgesehen. Die Sensorleiste 43 ist über ein nachstehend noch näher erläutertes Halteprofil 59 und zwei Lager 47 fest mit dem Schlitten 23 verbunden. Die Sensorleiste 43 ist daher mit der Gewindespindel 29 und dem Schlitten 23 verfahrbar. Durch das Verfahren der Sensorleiste 43 ist der Magnet 41 entlang der Sensorleiste 43 verstellbar.

Darüber hinaus umfasst das magnetische Positionsmesssystem 39 eine mit den Sensoren 45 verbundene Steuer- und Auswerteeinheit 49, die von den Sensoren 45 Sensorsignale empfängt, die jeweils eine eineindeutige Kennung des jeweiligen Sensors 45 aufweisen und anzeigen, wenn sich der Magnet 41 im Bereich des jeweiligen Sensors 45 befindet. Dadurch kann in einem Normalbetrieb des magnetischen Positionsmesssystems die Position des Magneten 41 relativ zu der Sensorleiste 43 bestimmt werden. Insbesondere ist die Steuer- und Auswerteeinheit 49 dazu in der Lage, die Position des Magneten 41 basierend auf mehreren Sensorsignalen zu bestimmen. Die Sensorsignale zeigen dabei jeweils nicht nur die Anwesenheit des Magneten 41 an, sondern auch, wie weit sich der Magnet 41 von dem jeweiligen Sensor 45 entfernt befindet. Hierdurch wird eine genaue Positionsbestimmung erreicht.

Die Sensorleiste 43 ist aus zwei Sensorleistenkomponenten 51, 53 zusammengesetzt, insbesondere zusammengesteckt, vorliegend und beispielsweise aus einer ersten Sensorleistenkomponente 51 mit acht Sensoren 45 und einer zweiten Sensorleistenkomponente 53 mit vier Sensoren 45. Die Unterteilung der Sensorleiste 43 in die beiden Sensorleistenkomponenten 51, 53 ist in Fig. 2d durch eine gestrichelte Linie angedeutet. Die beiden Sensorleistenkomponenten 51, 53 wurden nicht bereits vom Hersteller der Sensorleiste 43 zusammengesetzt, sondern erst von dem Hersteller des Preisauszeichnungssystems 11. Die Sensorleistenkomponenten 51, 53 wurden aus einem Satz von Sensorleistenkomponenten mit verschiedenen Längen entnommen, wobei jede Länge aber auch mehrfach vorhanden sein kann. Grundsätzlich kann der Satz auch nur eine Vielzahl von gleichlangen Sensorleistenkomponenten umfassen. Hierdurch kann vor Ort eine Sensorleiste 43 mit der für das jeweilige Preisauszeichnungssystem 11 bzw. den jeweiligen Etikettierer 13 am besten geeigneten Länge gewählt werden.

Damit die zusammengesetzte Sensorleiste 43 verwendet werden kann, muss der Steuer- und Auswerteeinheit 49 die Reihenfolge der Anordnung der Sensoren 45, insbesondere die Reihenfolge der Anordnung der Sensorleistenkomponenten 51, 53, bekannt sein. Um dies zu ermöglichen, wird bei der Inbetriebnahme des magnetischen Positionsmesssystems 39 bzw. des Preisauszeichnungssystems 11 ein Verfahren zur automatischen Einrichtung des magnetischen Positionsmesssystems 39 durchgeführt. Bei diesem Verfahren wird der Spindelmotor 27 eingeschaltet und damit - aus Sicht der Sensorleiste 43 - der Magnet 41 an den Sensoren 45 der Sensorleiste 43 entsprechend der Reihenfolge der Anordnung der Sensoren 45 vorbeigeführt wird. Beim Vorbeiführen an dem jeweiligen Sensor 45 wird dann die jeweilige eineindeutige Kennung des jeweiligen Sensors 45 an die Steuer- und Auswerteeinheit 49 übermittelt wird. Anhand der Reihenfolge des Eingangs der eineindeutigen Kennungen kann dann von der Steuer- und Auswerteeinheit 49 auch die Reihenfolge der Anordnung der Sensoren 45 auf der Sensorleiste 45 bestimmt werden. Hieraus und aus dem bekannten Abstand der Sensoren 45 zueinander können die Positionen der Sensoren 45 auf der Sensorleiste 43 berechnet und für den Normalbetrieb des Positionsmesssystems 39 gespeichert werden.

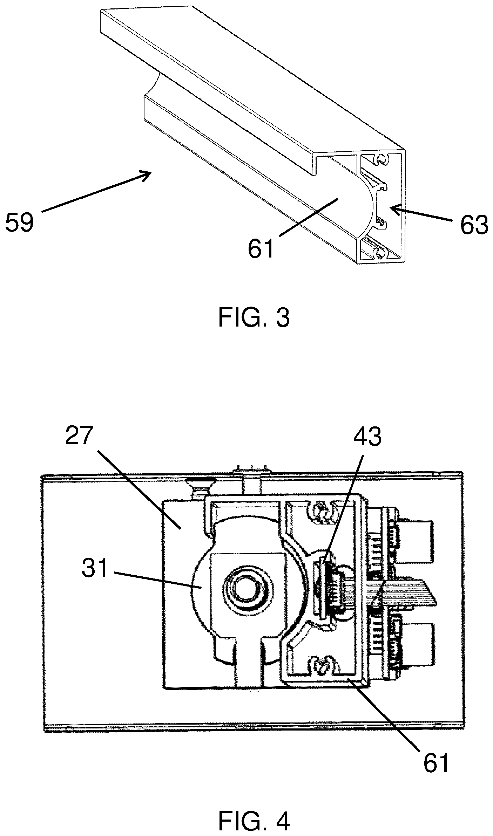

Die Sensorleiste 43 ist in das bereits vorstehend erwähnte Halterprofil 59 eingesetzt, wie es in der perspektivischen Ansicht gemäß Fig. 4 dargestellt ist. Das Halteprofil 59, das in Fig. 3 in Einzeldarstellung gezeigt ist, weist eine Profilwand 61 mit einer der Gewindespindel 29 zugewandten Seite und einer von der Gewindespindel 29 abgewandten Seite auf. Die der Gewindespindel 29 zugewandten Seite ist gegenförmig zu der Spindelmutter 31 ausgebildet. Die Gewindespindel 29 kann - relativ gesehen - an dieser Seite entlanggleiten, wobei diese Seite gleichzeitig eine Verdrehsicherung für die Gewindespindel 29 darstellt. An der von der Gewindespindel 29 abgewandten Seite ist eine C-förmige Schiene 63 ausgebildet, in die die Sensorleiste 43 eingeschoben ist. Das Halteprofil 59 besteht einem Kunststoff oder einem nicht magnetisierbaren Material, z.B. Aluminium, um das Magnetfeld des Magneten 41 möglichst wenig abzuschirmen.

### Bezugszeichenliste

- 11: Preisauszeichnungssystem
- 13: Oberbahn-Etikettierer
- 15: Unterbahn-Etikettierer
- 17: Förderband
- 19: Verstellsystem
- 21: weiteres Verstellsystem
- 23: Schlitten
- 25: Befestigungsstelle
- 27: Spindelmotor
- 29: Gewindespindel
- 31: Spindelmutter
- 33: Halter
- 35: Trageinrichtung
- 37: Gehäuse
- 39: Positionsmesssystem
- 41: Magnet
- 43: Sensorleiste
- 45: Sensor
- 47: Lager
- 49: Steuer- und Auswerteeinheit
- 51: Sensorleistenkomponente
- 53: Sensorleistenkomponente
- 55: Abstützrolle
- 57: Laufschiene
- 59: Halteprofil
- 61: Profilwand
- 63: Schiene
- 65: Schlitz

## Patentansprüche

1. Verfahren zur automatischen Einrichtung eines magnetischen Positionsmesssystems (39), das bei der Einstellung der Position eines Etikettierers (13, 15) eines Preisauszeichnungssystems (11) verwendet wird und eine Sensorleiste (43) mit mehreren in einer Reihe angeordneten magnetfeldsensitiven, jeweils eine eineindeutige Kennung aufweisenden Sensoren (45), insbesondere Hall-Sensoren, einen entlang der Sensorleiste (43) verstellbaren Magneten (41) und eine mit den Sensoren (45) verbundene Steuer- und Auswerteeinheit (49) aufweist, wobei bei dem Verfahren
- aus Sicht der Sensorleiste (43) der Magnet (41) an den Sensoren (45) der Sensorleiste (43) entsprechend der Reihenfolge ihrer Anordnung vorbeigeführt wird,
- beim Vorbeiführen an dem jeweiligen Sensor (45) dessen jeweilige eineindeutige Kennung an die Steuer- und Auswerteeinheit (49) übermittelt wird,
- anhand der Reihenfolge des Eingangs der eineindeutigen Kennungen die Reihenfolge der Anordnung der Sensoren (45) auf der Sensorleiste (43) erkannt wird, und
- aus dem bekannten gegenseitigen Abstand der Sensoren (45) zueinander und der erkannten Reihenfolge der Anordnung der Sensoren (45) auf der Sensorleiste (43) die Position des jeweiligen Sensors (45) auf der Sensorleiste (43) berechnet und für einen Normalbetrieb des magnetischen Positionsmesssystems (39) gespeichert wird.

2. Verfahren nach Anspruch 1,
**dadurch gekennzeichnet,**
**dass** die Sensorleiste (43) mehrere Sensorleistenkomponenten (51, 53) mit jeweils mehreren der Sensoren (45) umfasst, wobei vor dem Vorbeiführen des Magneten (41) an den Sensoren (45) der Sensorleiste (43) die Sensorleistenkomponenten (51, 53) zu der Sensorleiste (43) zusammengesetzt, insbesondere zusammengesteckt, werden.

3. Verfahren nach Anspruch 1 oder 2,
**dadurch gekennzeichnet,**
**dass** das Verfahren bei der Produktion und/oder bei der Inbetriebnahme und/oder bei jedem Start des magnetischen Positionsmesssystems (39) und/oder des Preisauszeichnungssystems (11) durchgeführt wird.

4. Preisauszeichnungssystem (11) mit wenigstens einem Etikettierer (13, 15), insbesondere einem Oberbahn-Etikettierer (13) und/oder einem Unterbahn-Etikettierer (15), der über ein Verstellsystem (19) horizontal und/oder vertikal verstellbar ist, um die Position des Etikettierers (13, 15), insbesondere eines Auszugs eines Unterbahn-Etikettierers (15), einzustellen, und wenigstens einem magnetischen Positionsmesssystem (39), das bei der Einstellung der Position eines Etikettierers (13, 15) eines Preisauszeichnungssystems (11) verwendbar ist und eine Sensorleiste (43) mit mehreren in einer Reihe angeordneten magnetfeldsensitiven, jeweils eine eineindeutige Kennung aufweisenden Sensoren (45), insbesondere Hall-Sensoren, einen entlang der Sensorleiste (43) verstellbaren Magneten (41), und eine mit den magnetfeldsensitiven Sensoren (45) verbundene Steuer- und Auswerteeinheit (49) aufweist, die dazu eingerichtet ist, ein Verfahren zur automatischen Einrichtung des magnetischen Positionsmesssystems (39) nach Anspruch 1 durchzuführen, bei dem
- aus Sicht der Sensorleiste (43) der Magnet (41) an den Sensoren (45) der Sensorleiste (43) entsprechend der Reihenfolge ihrer Anordnung vorbeigeführt wird,
- beim Vorbeiführen an dem jeweiligen Sensor (45) dessen jeweilige eineindeutige Kennung an die Steuer- und Auswerteeinheit (49) übermittelt wird,
- anhand der Reihenfolge des Eingangs der eineindeutigen Kennungen die Reihenfolge der Anordnung der Sensoren (45) auf der Sensorleiste (43) erkannt wird, und
- aus dem bekannten gegenseitigen Abstand der Sensoren (45) zueinander und der erkannten Reihenfolge der Anordnung der Sensoren (45) auf der Sensorleiste (43) die Position des jeweiligen Sensors (45) auf der Sensorleiste (43) berechnet und für einen Normalbetrieb des magnetischen Positionsmesssystems (39) gespeichert wird.

5. Preisauszeichnungssystem (11) nach Anspruch 4.
**dadurch gekennzeichnet,**
**dass** das Verstellsystem (19) einen Spindelmotor (27), eine von dem Spindelmotor (27) antreibbare Gewindespindel (29) und eine auf die Gewindespindel (29) aufgesetzte Spindelmutter (31) aufweist, wobei der Magnet (41) an der Spindelmutter (31) befestigt ist, um entlang der Sensorleiste (43) verstellbar zu sein, und wobei der Etikettierer (13, 15) bei angetriebenem Spindelmotor (27) horizontal und/oder vertikal verstellbar ist.

6. Preisauszeichnungssystem (11) nach Anspruch 5.
**dadurch gekennzeichnet,**
**dass** die Spindelmutter (31), insbesondere zwischen den beiden Schenkeln eines ortsfest fixierten U-förmigen Halters (33), ortsfest gehalten ist und/oder die Sensorleiste (43) mit der Gewindespindel (29) verfahrbar ist.

7. Preisauszeichnungssystem (11) nach Anspruch 5 oder 6,
**dadurch gekennzeichnet,**
**dass** die Spindelmutter (31) in einem Kunststoff-Spritzgussverfahren hergestellt ist, wobei bevorzugt ein metallisches Innengewinde, insbesondere eine Innengewindehülse, der Spindelmutter (31) und/oder der Magnet (41) in den Spritzguss der Spindelmutter (31) eingegossen ist.

8. Preisauszeichnungssystem (11) nach einem der Ansprüche 5 bis 7,
**dadurch gekennzeichnet,**
**dass** das Preisauszeichnungssystem (11) ein sich parallel zu der Gewindespindel (29) erstreckendes Halteprofil (59) umfasst, das eine Profilwand (61) mit einer der Gewindespindel (29) zugewandten ersten Seite und einer von der Gewindespindel (29) abgewandten zweiten Seite aufweist, wobei die erste Seite gegenförmig zu der Spindelmutter (31) ausgebildet ist, um bei angetriebenem Spindelmotor (27) ein Drehen der Spindelmutter (31) um ihre Achse zu unterbinden, und wobei an der zweiten Seite eine, insbesondere C-förmige, Schiene (63) ausgebildet ist, in die die Sensorleiste (43) eingesetzt, insbesondere eingeschoben ist.

9. Preisauszeichnungssystem (11) nach Anspruch 8,
**dadurch gekennzeichnet,**
**dass** das Halteprofil (59) aus einem Kunststoff oder einem nicht magnetisierbaren Material, z.B. Aluminium, gebildet ist.

10. Preisauszeichnungssystem (11) nach einem der Ansprüche 4 bis 9,
**dadurch gekennzeichnet,**
**dass** die Steuer- und Auswerteeinheit (49) dazu eingerichtet ist, in einem Normalbetrieb des magnetischen Positionsmesssystems (39) die Position des Magneten (41) relativ zu der Sensorleiste (43) anhand von Sensorsignalen, die von den Sensoren (45) übermittelt werden, wenn sich der Magnet (41) in ihrer Nähe befindet, zu bestimmen.

11. Preisauszeichnungssystem (11) nach einem der Ansprüche 4 bis 10,
**dadurch gekennzeichnet,**
**dass** die Steuer- und Auswerteeinheit (49) dazu eingerichtet ist, die Position des Magneten (41) basierend auf mehreren Sensorsignalen zu bestimmen und/oder dass die Sensorsignale anzeigen, wie weit sich der Magnet (41) von dem jeweiligen Sensor (45) entfernt befindet.

12. Preisauszeichnungssystem (11) nach einem der Ansprüche 4 bis 11,
**dadurch gekennzeichnet,**
**dass** die Sensorleiste (43) mehrere Sensorleistenkomponenten (51, 53) mit jeweils mehreren der Sensoren (45) umfasst, die zu der Sensorleiste (43) zusammengesetzt, insbesondere zusammengesteckt, sind.

## Claims

1. A method of automatically setting up a magnetic position measurement system (39) which is used when setting the position of a labeler (13, 15) of a price labeling system (11) and which has a sensor strip (43) having a plurality of magnetic field-sensitive sensors (45), which are arranged in a row and which each have a unique identifier, in particular Hall sensors, a magnet (41) which can be adjusted along the sensor strip (43), and a control and evaluation unit (49) which is connected to the sensors (45), wherein, in the method,
- from the point of view of the sensor strip (43), the magnet (41) is guided past the sensors (45) of the sensor strip (43) in accordance with the order of their arrangement,
- on the guiding past the respective sensor (45), its respective unique identifier is transmitted to the control and evaluation unit (49),
- the order of the arrangement of the sensors (45) on the sensor strip (43) is recognized based on the order of the reception of the unique identifiers, and
- the position of the respective sensor (45) on the sensor strip (43) is calculated from the known mutual distance of the sensors (45) from one another and from the recognized order of the arrangement of the sensors (45) on the sensor strip (43) and is stored for a normal operation of the magnetic position measurement system (39).

2. A method in accordance with claim 1,
**characterized in that**
the sensor strip (43) comprises a plurality of sensor strip components (51, 53) which each have a plurality of the sensors (45), with the sensor strip components (51, 53) being assembled, in particular plugged together, to form the sensor strip (43) before the guiding of the magnet (41) past the sensors (45) of the sensor strip (43).

3. A method in accordance with claim 1 or 2,
**characterized in that**
the method is performed on the production and/or on the putting into operation and/or on each start of the magnetic position measurement system (39) and/or of the price labeling system (11).

4. A price labeling system (11) comprising at least one labeler (13, 15), in particular a top labeler (13) and/or a bottom labeler (15), which is horizontally and/or vertically adjustable via an adjustment system (19) in order to set the position of the labeler (13, 15), in particular of a pullout of a bottom labeler (15), and at least one magnetic position measurement system (39) which can be used when setting the position of a labeler (13, 15) of a price labeling system (11) and which has a sensor strip (43) having a plurality of magnetic field-sensitive sensors (45), which are arranged in a row and which each have a unique identifier, in particular Hall sensors, a magnet (41) which can be adjusted along the sensor strip (43), and a control and evaluation unit (49) which is connected to the magnetic field-sensitive sensors (45) and which is configured to perform a method of automatically setting up the magnetic position measurement system (39) in accordance with claim 1, in which method,
- from the point of view of the sensor strip (43), the magnet (41) is guided past the sensors (45) of the sensor strip (43) in accordance with the order of their arrangement,
- on the guiding past the respective sensor (45), its respective unique identifier is transmitted to the control and evaluation unit (49),
- the order of the arrangement of the sensors (45) on the sensor strip (43) is recognized based on the order of the reception of the unique identifiers, and
- the position of the respective sensor (45) on the sensor strip (43) is calculated from the known mutual distance of the sensors (45) from one another and from the recognized order of the arrangement of the sensors (45) on the sensor strip (43) and is stored for a normal operation of the magnetic position measurement system (39).

5. A price labeling system (11) in accordance with claim 4,
**characterized in that**
the adjustment system (19) has a spindle motor (27), a threaded spindle (29) drivable by the spindle motor (27), and a spindle nut (31) placed onto the threaded spindle (29), with the magnet (41) being fastened to the spindle nut (31) to be adjustable along the sensor strip (43), and with the labeler (13, 15) being horizontally and/or vertically adjustable when the spindle motor (27) is driven.

6. A price labeling system (11) in accordance with claim 5,
**characterized in that**
the spindle nut (31) is held in a stationary manner, in particular between the two limbs of a U-shaped holder (33) fixed in a stationary manner, and/or the sensor strip (43) can be moved with the threaded spindle (29).

7. A price labeling system (11) in accordance with claim 5 or 6,
**characterized in that**
the spindle nut (31) is manufactured in a plastic injection molding process, with preferably a metallic internal thread, in particular an internally threaded sleeve, of the spindle nut (31) and/or the magnet (41) being cast into the injection molding of the spindle nut (31).

8. A price labeling system (11) in accordance with any one of the claims 5 to 7, **characterized in that**
the price labeling system (11) comprises a holding profile (59) which extends in parallel with the threaded spindle (29) and which has a profile wall (61) having a first side facing the threaded spindle (29) and a second side facing away from the threaded spindle (29), with the first side being formed in a counter-shape to the spindle nut (31) in order to prevent a rotation of the spindle nut (31) about its axis when the spindle motor (27) is driven, and with a rail (63), in particular a C-shaped rail (63), into which the sensor strip (43) is inserted, in particular pushed in, being formed at the second side.

9. A price labeling system (11) in accordance with claim 8,
**characterized in that**
the holding profile (59) is formed from a plastic or a non-magnetizable material, e.g. aluminum.

10. A price labeling system (11) in accordance with any one of the claims 4 to 9, **characterized in that**
the control and evaluation unit (49) is configured, in a normal operation of the magnetic position measurement system (39), to determine the position of the magnet (41) relative to the sensor strip (43) based on sensor signals which are transmitted by the sensors (45) when the magnet (41) is located in their vicinity.

11. A price labeling system (11) in accordance with any one of the claims 4 to 10, **characterized in that**
the control and evaluation unit (49) is configured to determine the position of the magnet (41) based on a plurality of sensor signals, and/or **in that** the sensor signals indicate how far away the magnet (41) is from the respective sensor (45).

12. A price labeling system (11) in accordance with any one of the claims 4 to 11, **characterized in that**
the sensor strip (43) comprises a plurality of sensor strip components (51, 53) which each have a plurality of the sensors (45) and which are assembled, in particular plugged together, to form the sensor strip (43).

## Revendications

1. Procédé pour l'installation automatique d'un système magnétique de mesure de position (39) qui est utilisé lors du réglage de la position d'une étiqueteuse (13, 15) d'un système d'étiquetage de prix (11) et qui présente une barrette de capteurs (43) ayant plusieurs capteurs (45) sensibles aux champs magnétiques, disposés en une rangée et présentant chacun une identification univoque, en particulier des capteurs à effet Hall, un aimant (41) déplaçable le long de la barrette de capteurs (43) et une unité de commande et d'évaluation (49) reliée aux capteurs (45), procédé dans lequel
- vu depuis la barrette de capteurs (43), l'aimant (41) passe devant les capteurs (45) de la barrette de capteurs (43) selon l'ordre de leur disposition,
- lors du passage devant le capteur respectif (45), son identification univoque respective est transmise à l'unité de commande et d'évaluation (49),
- à l'aide de l'ordre d'entrée des identifications univoques, l'ordre de disposition des capteurs (45) sur la barrette de capteurs (43) est reconnu, et
- à partir de la distance mutuelle connue des capteurs (45) les uns par rapport aux autres, et de l'ordre reconnu de la disposition des capteurs (45) sur la barrette de capteurs (43), la position de chaque capteur (45) sur la barrette de capteurs (43) est calculée et mémorisée pour un fonctionnement normal du système magnétique de mesure de position (39).

2. Procédé selon la revendication 1,
**caractérisé en ce que**
la barrette de capteurs (43) comprend plusieurs composants de barrette de capteurs (51, 53) comportant chacun plusieurs desdits capteurs (45), les composants de barrette de capteurs (51, 53) étant assemblés, en particulier par enfichage, pour donner la barrette de capteurs (43), avant le passage de l'aimant (41) devant les capteurs (45) de la barrette de capteurs (43).

3. Procédé selon la revendication 1 ou 2,
**caractérisé en ce que**
le procédé est mis en oeuvre lors de la production et/ou lors de la mise en service et/ou à chaque démarrage du système magnétique de mesure de position (39) et/ou du système d'étiquetage de prix (11).

4. Système d'étiquetage de prix (11) comprenant au moins une étiqueteuse (13, 15), en particulier une étiqueteuse pour face supérieure (13) et/ou une étiqueteuse pour face inférieure (15), qui est déplaçable horizontalement et/ou verticalement par l'intermédiaire d'un système de déplacement (19), afin de régler la position de l'étiqueteuse (13, 15), en particulier d'un extracteur d'une étiqueteuse pour face inférieure (15), et au moins un système magnétique de mesure de position (39) qui peut être utilisé lors du réglage de la position d'une étiqueteuse (13, 15) d'un système d'étiquetage de prix (11) et qui présente une barrette de capteurs (43) ayant plusieurs capteurs (45) sensibles aux champs magnétiques, disposés en une rangée et présentant chacun une identification univoque, en particulier des capteurs à effet Hall, un aimant (41) déplaçable le long de la barrette de capteurs (43) et une unité de commande et d'évaluation (49) reliée aux capteurs (45) sensibles aux champs magnétiques, qui est conçue pour mettre en oeuvre un procédé d'installation automatique du système magnétique de mesure de position (39) selon la revendication 1, dans lequel
- vu depuis la barrette de capteurs (43), l'aimant (41) passe devant les capteurs (45) de la barrette de capteurs (43) selon l'ordre de leur disposition,
- lors du passage devant le capteur respectif (45), son identification univoque respective est transmise à l'unité de commande et d'évaluation (49),
- à l'aide de l'ordre d'entrée des identifications univoques, l'ordre de disposition des capteurs (45) sur la barrette de capteurs (43) est reconnu, et
- à partir de la distance mutuelle connue des capteurs (45) les uns par rapport aux autres et de l'ordre reconnu de la disposition des capteurs (45) sur la barrette de capteurs (43), la position de chaque capteur (45) sur la barrette de capteurs (43) est calculée et mémorisée pour un fonctionnement normal du système magnétique de mesure de position (39).

5. Système d'étiquetage de prix (11) selon la revendication 4,
**caractérisé en ce que**
le système de déplacement (19) comprend un moteur de broche (27), une broche filetée (29) apte à être entraînée par le moteur de broche (27), et un écrou de broche (31) placé sur la broche filetée (29), l'aimant (41) étant fixé à l'écrou de broche (31) de manière à être déplaçable le long de la barrette de capteurs (43), et l'étiqueteuse (13, 15) étant déplaçable horizontalement et/ou verticalement lorsque le moteur de broche (27) est entraîné.

6. Système d'étiquetage de prix (11) selon la revendication 5,
**caractérisé en ce que**
l'écrou de broche (31) est maintenu stationnaire, en particulier entre les deux branches d'un support en forme de U (33) fixé de façon stationnaire, et/ou
la barrette de capteurs (43) est déplaçable avec la broche filetée (29).

7. Système d'étiquetage de prix (11) selon la revendication 5 ou 6,
**caractérisé en ce que**
l'écrou de broche (31) est fabriqué par un procédé de moulage par injection de matière plastique, de préférence, un taraudage métallique, en particulier une douille taraudée, de l'écrou de broche (31) et/ou l'aimant (41) étant intégré(e) par moulage dans la matière moulée par injection de l'écrou de broche (31).

8. Système d'étiquetage de prix (11) selon l'une des revendications 5 à 7, **caractérisé en ce que**
le système d'étiquetage de prix (11) comprend un profilé de retenue (59) s'étendant parallèlement à la broche filetée (29), qui présente une paroi de profilé (61) ayant une première face tournée vers la broche filetée (29) et une deuxième face détournée de la broche filetée (29), la première face étant réalisée en forme antagoniste à l'écrou de broche (31), afin d'empêcher une rotation de l'écrou de broche (31) autour de son axe lorsque le moteur de broche (27) est entraîné, et un rail (63), en particulier en forme de C, étant réalisé sur la deuxième face, dans lequel la barrette de capteurs (43) est insérée, en particulier par glissement.

9. Système d'étiquetage de prix (11) selon la revendication 8,
**caractérisé en ce que**
le profilé de retenue (59) est réalisé en une matière plastique ou en un matériau non magnétisable, par exemple en aluminium.

10. Système d'étiquetage de prix (11) selon l'une des revendications 4 à 9, **caractérisé en ce que**
l'unité de commande et d'évaluation (49) est conçue pour déterminer, en fonctionnement normal du système magnétique de mesure de position (39), la position de l'aimant (41) par rapport à la barrette de capteurs (43) à partir des signaux de capteurs transmis par les capteurs (45) lorsque l'aimant (41) se trouve à proximité de ceux-ci.

11. Système d'étiquetage de prix (11) selon l'une des revendications 4 à 10, **caractérisé en ce que**
l'unité de commande et d'évaluation (49) est conçue pour déterminer la position de l'aimant (41) en se basant sur plusieurs signaux de capteurs, et/ou **en ce que** les signaux de capteurs indiquent à quelle distance l'aimant (41) se trouve du capteur respectif (45).

12. Système d'étiquetage de prix (11) selon l'une des revendications 4 à 11, **caractérisé en ce que**
la barrette de capteurs (43) comprend plusieurs composants de barrette de capteurs (51, 53) comportant chacun plusieurs desdits capteurs (45) qui sont assemblés, en particulier par enfichage, pour donner la barrette de capteurs (43).
